Europäisches Patentamt

European Patent Office

Office européen des brevets

(19)

(11) Veröffentlichungsnummer: **0 056 455**
**B1**

# (12) EUROPÄISCHE PATENTSCHRIFT

(45) Veröffentlichungstag der Patentschrift:
18.07.84

(21) Anmeldenummer: 81109866.4

(22) Anmeldetag: 25.11.81

(51) Int. Cl.³: **H 04 B 3/56, H 02 J 13/00**

(54) System zur Übertragung von Informationen mittels Tonfrequenzsignalen über das elektrische Energieversorgungsnetz.

(30) Priorität: 09.01.81 CH 123/81

(43) Veröffentlichungstag der Anmeldung:
28.07.82 Patentblatt 82/30

(45) Bekanntmachung des Hinweises auf die Patenterteilung:
18.07.84 Patentblatt 84/29

(84) Benannte Vertragsstaaten:
AT CH DE FR GB LI NL SE

(56) Entgegenhaltungen:
US - A - 1 672 940
US - A - 1 724 112
US - A - 1 803 149

ELEKTROTECHNIK, Band 44, Nr. 10/11, 10. März 1962
WÜRZBURG (DE) W. GRÜBEL: "Die Technik der
Rundsteuersysteme", Seiten 121-124

(73) Patentinhaber: LGZ LANDIS & GYR ZUG AG,
CH-6301 Zug (CH)

(72) Erfinder: Petr, Jan, Stolzengrabenstrasse 33,
CH-6317 Oberwil (CH)

(74) Vertreter: Müller, Hans-Jürgen, Dipl.-Ing. et al, Müller,
Schupfner & Gauger
Lucile-Grahn-Strasse 38 Postfach 80 13 69,
D-8000 München 80 (DE)

## Beschreibung

Die Erfindung bezieht sich auf ein System zur Übertragung von Informationen mittels Tonfrequenzsignalen über das elektrische Energieversorgungsnetz nach dem Oberbegriff des Anspruchs 1.

In der US-PS 1 724 112 ist ein System zur Übertragung von Informationen mittels Tonfrequenzsignalen über ein Mehrphasennetz entsprechend dem Oberbegriff des Anspruchs 1 beschrieben, bei welchem gemäß der dortigen Fig. 7 die Auskopplung der Tonfrequenzsignale mittels zweier Stromwandler aus zwei Phasen der Niederspannungsebene erfolgt, wobei die erfaßten Ströme in umgekehrter Richtung laufen.

Solche Systeme finden vorzugsweise bei der automatischen Übertragung von durch in der Niederspannungsebene angeordneten Zählerstands-Ermittlungsgeräten gesammelten Informationen zu einer Abfragezentrale Verwendung. Da zumindest bei größeren Netzen die Abfragezentralen in einer höheren Netzebene, insbesondere im Mittelspannungsnetz, vorhanden sind, um möglichst viele Zählerstände zu erfassen, stellt sich das Problem, die Information über die Verteiler-Transformatoren zwischen den beiden Spannungsebenen zu übertragen.

In der DE-AS 2 445 388 ist ein System beschrieben, bei welchem diese Schwierigkeit durch eine besondere Wahl der Frequenzen im Tonbereich und durch besondere Ausgestaltung des mit dem Zähler verbundenen Senders und dessen Ankopplung an das Niederspannungsnetz gelöst werden soll. Für die Auskopplung der Tonfrequenzsignale wird ein Spannungswandler zur Herabsetzung der Spannung von beispielsweise 2400 V auf 110 V vorgeschlagen, wobei der Empfänger an die 110-V-Leitung angeschlossen ist. Die dargestellten Verhältnisse gelten für ein Netz der USA.

Der Erfindung liegt die Aufgabe zugrunde, eine einfachere Auskopplung zu ermöglichen, welche den Empfang der Information aus allen drei Phasen des Niederspannungsnetzes erlaubt, ohne daß erhebliche Unterschiede im Pegel der von den einzelnen Phasen empfangenen Signale durch besondere Vorkehrungen im angekoppelten Empfänger ausgeglichen werden müssen.

Die Aufgabe wird durch die kennzeichnenden Merkmale des Anspruchs 1 gelöst.

Das erfindungsgemäße System besitzt den Vorteil, daß der gebräuchliche, preiswerte Einzelteile für die Auskopplung benützt werden können, welche sich zudem für andere Zwecke anbieten, und daß sich die angeschlossenen Empfänger einfacher ausführen lassen. Zudem müssen die Phasen, auf welche die Informationssignale aufgeprägt werden, bei der Ankopplung nicht mühsam herausgesucht oder durch besondere Vorkehrungen berücksichtigt werden. Schließlich ist es vorzüglich für ein breitbandiges System zur Signalübertragung gemäß der CH-PS 604 409 geeignet, bei welcher sich die Signalfrequenz innerhalb eines Impulses in vorbestimmter Weise verändert.

Die Erfindung wird anhand einer Zeichnung näher erläutert.

Die Figuren der Zeichnung zeigt
Fig. 1 einen Verteiltransformator und
Fig. 2 eine Einrichtung zur Auskoppelung von Tonfrequenzsignalen.

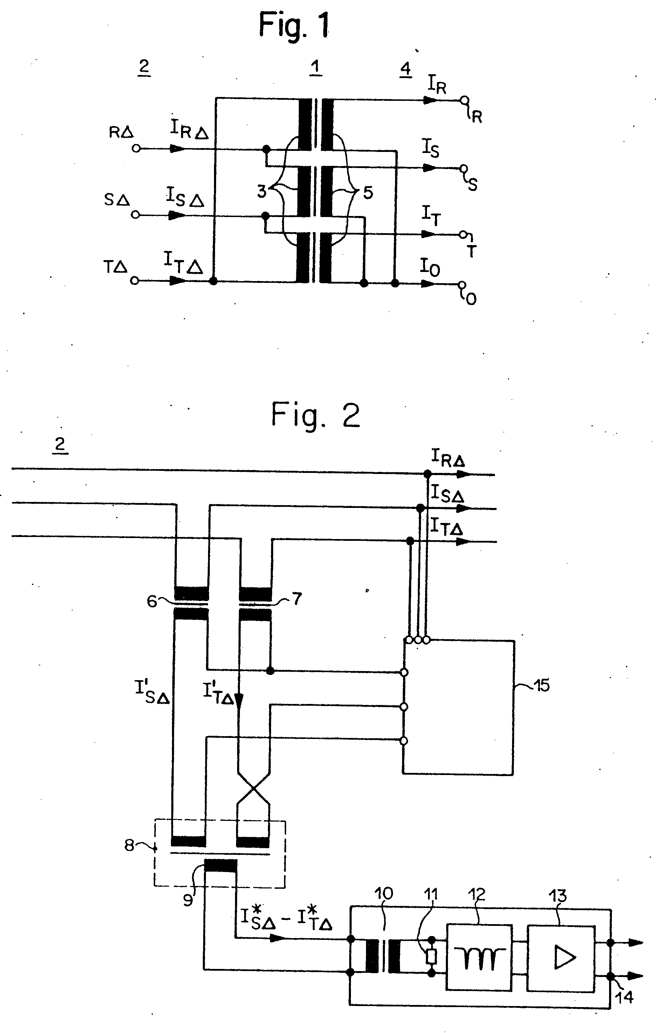

Zum Verständnis der Erfindung wird zuerst der Verteiltransformator der Fig. 1 samt den zugehörigen Phasenströmen erklärt. Zur Erklärung des Prinzips wird von einer Vereinfachung, nämlich von idealen Transformatoren, ausgegangen. Demgemäß gelten die Beziehungen der einzelnen Phasenströme untereinander auch für die entgegen dem Energiefluß über das Netz übertragenen Signalströme, welche beispielsweise für zu übertragende Verbrauchs-Zählerstände signifikant sind.

In den Energieversorgungsnetzen in Europa werden in der Mittelspannungsebene Dreileiter und in der Niederspannungsebene Vierleiter verwendet. Transformatoren 1 weisen daher auf der Mittelspannungsseite 2 im Dreieck geschaltete Wicklungen 3 und auf der Niederspannungsseite 4 im Stern geschaltete Wicklungen 5 auf. Auf der Niederspannungsseite 4 stehen die Netzströme der einzelnen Phasen R, S, T und des mit dem Sternmittelpunkt verbundenen Nulleiters 0 in folgender Beziehung:

$$I_R + I_S + I_T = I_0 \qquad (1)$$

wobei die Indices die einzelnen Phasen oder den Nulleiter bezeichnen.

Die Ströme auf der Mittelspannungsseite 2 summieren sich zu Null:

$$I_{R,I} + I_{S,I} + I_{T,I} = 0 \qquad (2)$$

Sie stehen mit den Strömen auf der Niederspannungsseite 4 des Transformators 1 in folgenden Beziehungen:

$$I_{R,I} = (I_R - I_S)k \qquad (3)$$

$$I_{S,I} = (I_S - I_T)k \qquad (4)$$

$$I_{T,I} = (I_T - I_R)k \qquad (5)$$

k ist die Transformatorkonstante.

Aus den Gleichungen (3) bis (5) ist ersichtlich, daß jeder einzelne der Ströme $I_{R,I}$, $I_{S,I}$ und $I_{T,I}$ der Mittelspannungsseite 2 durch die Ströme von je zwei Phasen der Niederspannungsseite 4 bestimmt sind.

Eine Bestimmung der Tonfrequenzsignalströme aus der Niederspannungsebene durch Summation gemäß der Gleichung (1) der Tonfrequenzströme $I_{R,I} + I_{S,I} + I_{T,I}$ der Mittelspannungsebene ist jedenfalls bei tieferen Tonfrequenzen nicht möglich. Bei höheren Frequenzen der zu erfassenden Tonfrequenzsignale weicht das Verhalten des Verteiler-Transformators 1 wegen parasitärer Kapazitäten und der Streuinduktivität von den idealen Bedingungen nach den Gleichungen (1) bis (5) ab. Es kann deshalb an jeder Phase des Mittelspannungsnetzes 2 ein kleiner Anteil des Sendestromes aus jeder Phase der Niederspannungsebene 4 auftreten. Die einzelnen Pegel weichen aber in der Regel in hohem Maße voneinander ab. Die Schaltung nach Fig. 2 soll diese Schwierigkeiten beheben.

In der Fig. 2 ist eine Einrichtung zur Auskoppelung von einem Niederspannungsnetz heteropolar aufgeprägten Tonfrequenzsignalen aus einem mittels Verteiltransformatoren 1 mit dem Niederspannungsnetz 4 der Fig. 1 verbundenen Mittelspannungsnetz 2 dargestellt. Sie besteht aus je einem in den Phasenleitungen mit den Strömen $I_{S.I}$ und $I_{T.I}$ angeordneten Stromwandler 6 und 7 und einer Stromerfassungsschaltung 8. Diese kann vorzugsweise aus einer beide Leiter umfassenden Stromzange oder speziell dafür ausgelegten Stromwandlern bestehen, durch welche der Strom der einen Phase, beispielsweise der Strom $I'_{S.I}$ der Phase S, in der einen und der Strom der zweiten Phase, beispielsweise der Strom $I'_{T.I}$ der Phase T, in der entgegengesetzten Richtung fließt. Einer Sekundärwicklung 9 der Stromzange wird erfindungsgemäß die Differenz der beiden Ströme $I^*_{S\varDelta} - I^*_{T\varDelta}$ entnommen, welche den Strömen $I_{S.I}$ und $I_{T.I}$ der Phasen$S\varDelta$ und $T\varDelta$ proportional sind.

Der Differenzstrom $I^*_{S.I} - I^*_{T.I}$ kann einem Empfänger 10 zugeführt werden. Vom Differenzstrom $I^*_{S.I} - I^*_{T.I}$ wird durch einen Widerstand 11 eine Spannung abgeleitet, aus deren Frequenzgemisch mittels eines Kammfilters 12 die Netzfrequenz und deren Harmonische ausgesiebt und das Restsignal durch eine Schwellen- und Verstärkerschaltung 13 an Ausgänge 14 geleitet werden, von denen eine nicht gezeichnete Ausworteschaltung angesteuert wird.

Falls es nicht möglich ist, beide Leiter mit den Strömen $I'_{S\varDelta}$ und $I'_{T\varDelta}$ mit einer einzigen Stromzange zu umfassen, können zwei Stromzangen oder weitere Stromwandler, je eine für einen Leiter, verwendet und die Differenzbildung der Sekundärströme $I^*_{S.I} - I^*_{T\varDelta}$ durch eine geeignete Gegeneinander-Schaltung der Sekundärwicklungen 9 der beiden vorgenommen werden.

Selbstverständlich können auch die Ströme aus zwei anderen Phasen der Mittelspannungsebene, z. B. von $R\varDelta$ und $S\varDelta$ oder $R\varDelta$ und $T\varDelta$, in gleicher Weise erfaßt und ausgekoppelt werden.

Die Ströme der beiden Spannungsebenen stehen im oben angeführten Beispiel nach der Fig. 2 in folgender Beziehung:

$$I_{S.I} - I_{T.I} \sim I_S - 2\,I_T + I_R$$

Daraus kann ersehen werden, daß es möglich ist, durch Erfassung der Differenz der Ströme zweier Phasen der Mittelspannungsebene 2 jeden der zwischen einer Phase und dem Nulleiter oder zwischen zwei Phasen der Niederspannungsebene eingespeisten Signalströme zu ermitteln und auszuwerten.

Besonders vorteilhaft ist dabei, daß die für ein in der Mittelspannungsebene angeordnetes Energiemeßgerät 15 benötigten Stromwandler 6 und 7 gleichzeitig für die Auskopplung der von der Niederspannungsebene 4 her entgegen der Energieflußrichtung verlaufenden Tonfrequenzsignale benützt werden können.

**Patentansprüche**

1. System zur Übertragung von Informationen mittels Tonfrequenzsignalen über das elektrische Energieversorgungsnetz entgegen der Richtung des Energieflusses über Verteiler-Transformatoren (1) und mit einem mittels zweier die Tonfrequenzsignale auskoppelnder Stromwandler (6, 7) an das Energieversorgungsnetz anschließbaren Empfänger (10), dadurch gekennzeichnet, daß die Stromwandler (6, 7) im Mittelspannungsnetz (2) angeordnet sind, daß die Ströme ($I_{R\varDelta}$, $I_{S\varDelta}$, $I_{T\varDelta}$) von zwei beliebigen der drei Phasen ($R\varDelta$, $S\varDelta$, $T\varDelta$) dieses Mittelspannungsnetzes in den Sekundärwicklungen dieser Stromwandler (6, 7) erfaßt und voneinander subtrahiert werden und daß das Differenzsignal dem Empfänger (10) zugeführt wird.

2. System nach Anspruch 1, dadurch gekennzeichnet, daß die Sekundärwicklungen der Stromwandler (6, 7) gegeneinandergeschaltet sind.

3. System nach Anspruch 1, dadurch gekennzeichnet, daß die Stromwandler (6, 7) gleichzeitig für die Messung der Ströme mit Netzfrequenz in einem Gerät (15) zur Energieerfassung im Mittelspannungsnetz (2) ausgenützt werden.

**Claims**

1. A system for transmitting information by means of audio frequency signals by way of the electrical power supply network against the direction of the flow of power by way of distribution transformers (1) and with a receiver (10) which can be connected to the power supply network by means of two current transformers (6, 7) for decoupling the audio frequency signals, characterised in that the current transformers (6, 7) are arranged in the medium voltage network (2), that the currents ($I_{R\varDelta}$, $I_{S\varDelta}$, $I_{T\varDelta}$) on any two of the three phases ($R\varDelta$, $S\varDelta$, $T\varDelta$) of said medium voltage network are detected in the secondary windings of said current transformers (6, 7) and subtracted from each other and that the difference signal is applied to the receiver (10).

2. A system according to claim 1 characterised in that the secondary windings of the current transformers (6, 7) are connected in opposition to each other.

3. A system according to claim 1 characterised in that the current transformers (6, 7) are used at the same time for measuring the currents at mains network frequency in a device (15) for detecting power in the medium voltage network (2).

## Revendications

1. Système pour la transmission d'informations au moyen de signaux à fréquence acoustique par le réseau de distribution électrique, dans le sens inverse du flux d'énergie, à l'aide de transformateurs de distribution (1) et avec un récepteur (10) raccordé au réseau de distribution d'énergie par deux transformateurs d'intensité (6, 7), découplant les signaux à fréquence acoustique, ledit système étant caractérisé en ce que les transformateurs d'intensité (6, 7) sont disposés dans le réseau moyenne tension (2); les courants ($I_{R\Delta}$, $I_{S\Delta}$, $I_{T\Delta}$) de deux quelconques des trois phases ($R\Delta$, $S\Delta$, $T\Delta$) de ce réseau moyenne tension sont déterminés dans les enroulements secondaires desdits transformateurs d'intensité (6, 7) puis soustraits l'un de l'autre; et le signal différentiel est transmis au récepteur (10).

2. Système selon revendication 1, caractérisé par le couplage en opposition des enroulements secondaires des transformateurs d'intensité (6, 7).

3. Système selon revendication 1, caractérisé en ce que les transformateurs d'intensité (6, 7) sont utilisés simultanément pour la mesure des courants à la fréquence du réseau dans un appareil (15) de détermination de l'énergie dans le réseau moyenne tension (2).

# Fig. 1

# Fig. 2